Europäisches Patentamt

European Patent Office

Office européen des brevets

(11) Veröffentlichungsnummer: **0 281 127**
**A2**

(12) **EUROPÄISCHE PATENTANMELDUNG**

(21) Anmeldenummer: **88103266.8**

(22) Anmeldetag: **03.03.88**

(51) Int. Cl.4: **G03B 19/07**

(30) Priorität: **05.03.87 DE 3707205**

(43) Veröffentlichungstag der Anmeldung:
**07.09.88 Patentblatt 88/36**

(84) Benannte Vertragsstaaten:
**AT BE CH DE FR GB LI**

(71) Anmelder: **Schulte, Gerd**
**Martin-Luther-Strasse 32-38**
**D-1000 Berlin 28(DE)**

(72) Erfinder: **Schulte, Gerd**
**Martin-Luther-Strasse 32-38**
**D-1000 Berlin 28(DE)**

(74) Vertreter: **Beckensträter, Friedrich Wihelm,**
**Dr.**
**Falkensteiner Strasse 23**
**D-6000 Frankfurt am Main 1(DE)**

(54) **Kompaktkamera mit mehreren Brennweiten.**

(57) Die Erfindung ermöglicht·den Bau von besonders flachen Kompaktkameras mit besonders langen Brennweiten und dazu einem parallaxfreien Sucher dadurch, daß bei Aufnahmen mit mittleren und langen Brennweiten der Hauptstrahl zweifach rechtwinklig abgelenkt ist, wobei der bildseitige zu dem objektseitigen Hauptstrahl wiederum im rechten Winkel steht, während bei Aufnahmen im Weitwinkelbereich der Hauptstrahl nicht abgelenkt ist. 35 mm-Kameras für das volle Kleinbildformat 24 x 36 mm weisen demnach selbst mit eingebauter Tele-Brennweite von über 100 mm nur eine Höhe von 30 mm auf und können darüber hinaus leicht auf Weitwinkelaufnahme umgestellt werden.

Fig. 2

Xerox Copy Centre

## Kompaktkamera mit mehreren Brennweiten

Die Erfindung betrifft eine Kompaktkamera mit mehreren Brennweiten und abgelenktem Strahlengang.

Kompaktkameras, welche die Auswahl unter mehreren eingebauten Brennweiten gestatten, sind als sogenannte Pocketkameras für das Format 110 in zahlreichen Varianten vorgeschlagen und ausgeführt worden. Einige von ihnen enthalten Spiegelreflex-oder parallaxfreie Fernrohrsucher, außerdem Zoom-oder Teleobjektive mit Brennweiten von bis zu 200 mm, bezogen auf den 35 mm-Film.

Entsprechende 35 mm-Kameras sind dagegen deutlich voluminöser, wobei gleichzeitig der Brennweitenbereich auf etwa 85 mm begrenzt ist, sofern sie die Bezeichnung "kompakt" wenigstens einigermaßen zu Recht verdienen. Eine bekannte derartige Kamera bewirkt für das 80 mm-Teleobjektiv durch zweifache Spiegelung um 90° eine raumsparende Faltung und gleichzeitig eine Parallelverschiebung des Hauptstrahls. Dennoch ist auch diese Kamera über 50 mm dick. Dagegen ist die vielfach gebräuchliche Einfachspiegelung um 90° zugleich mit einer meist nachteiligen Veränderung der Bildlage verbunden.

Der Erfindung liegt die Aufgabe zugrunde, den Brennweitenbereich zu erweitern und dabei gleichzeitig die Handlichkeit der Kamera zu verbessern.

Diese Aufgabe wird erfindungsgemäß dadurch gelöst, daß bei Aufnahmen mit mittleren und langen Brennweiten der Hauptstrahl zweifach rechtwinklig abgelenkt ist, wobei der bildseitige zu dem objektseitigen Hauptstrahl wiederum im rechten Winkel steht, während bei Aufnahmen im Weitwinkelbereich der Hauptstrahl nicht abgelenkt ist.

Vorteilhafte Ausgestaltungen und Weiterbildungen der Erfindung ergeben sich aus den Unteransprüchen zu Patentanspruch 1.

Durch die erfindungsgemäßen Maßnahmen ist es möglich, die Bauhöhe der Kamera, die dabei wie eine Pocketkamera zu handhaben ist, auch beim vollen Kleinbildformat 24 x 36 mm auf ca. 30 mm zu reduzieren. Selbst durch den Einbau längerer Brennweiten, 135 mm und mehr, ändert sich daran nichts. Noch günstigere Abmessungen ergeben sich aufgrund der vorteilhafteren Filmführung beim Halbformat 18 x 24 mm und ebenfalls bei der Verwendung von Rollfilm 120 bzw. 220.

Im folgenden werden Ausführungsbeispiele der Erfindung anhand der anhängenden Zeichnungen näher erläutert.

Fig. 1 zeigt in schematischer Darstellung in Draufsicht etwa im Maßstab 1:1 eine Ausführungsform einer mit transparentem Deckel gezeichneten Kamera für das Format 24 x 36 mm in der Position für Aufnahmen mit mittlerer Brennweite.

Fig. 2 zeigt in schematischer Darstellung die gleiche Kamera in der Position für Aufnahmen mit langer Brennweite.

Fig. 3 zeigt in schematischer Darstellung eine weitere Ausführungsform einer erfindungsgemäßen Kompaktkamera mit zwei Brennweiten in der Position für Aufnahmen mit kurzer Brennweite.

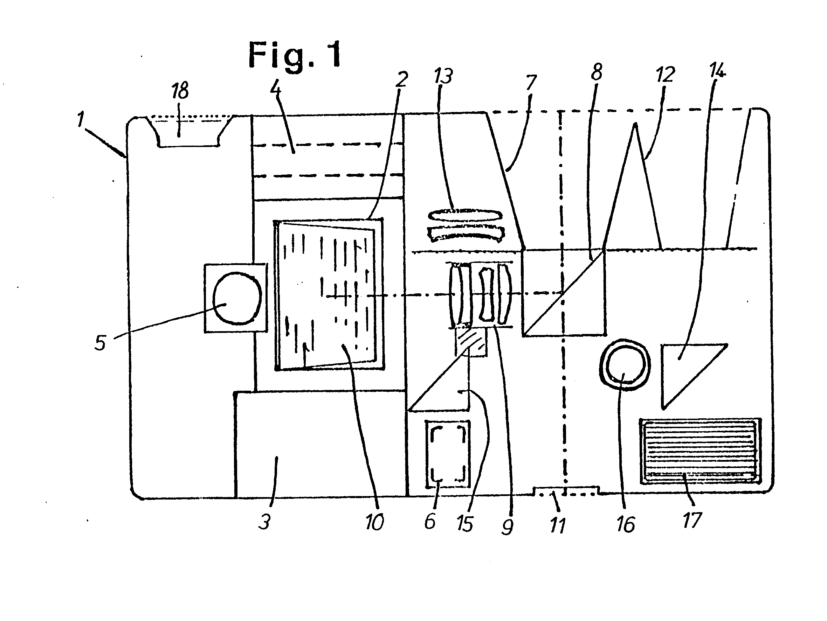

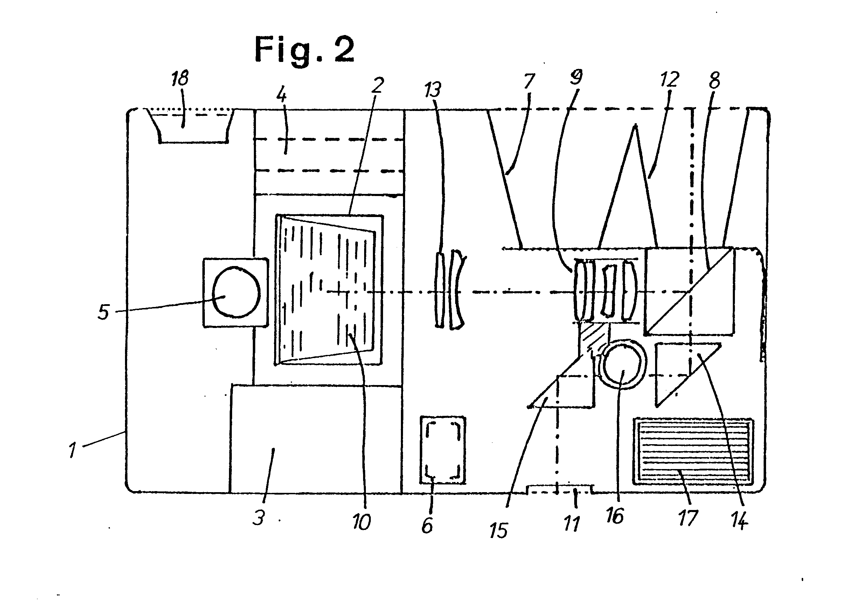

In den Figuren 1 und 2 sind bezeichnet mit 1 das Gehäuse, 2 das Bildfenster 24 x 36 mm, 3 die Kammer für die 35 mm-Filmpatrone, 4 die Aufwickelspule, 5 das Weitwinkelobjektiv, 6 der zugehörige Sichereinblick, 7 die Eintrittsöffnung für die mittlere Brennweite, 8 ein erstes verschiebbares, objektseitiges Halbspiegelprisma, 9 eine axial verschiebbare Linsengruppe (Objektiv) mittlerer Brennweite, 10 ein zweiter verschiebbarer, bildseitiger Ablenkspiegel in 45°-Position, der eine Horizontal-Vertikal-Ablenkung um 90° bewirkt, 11 die Sucheraustrittsöffnung für Aufnahmen mit mittlerer und langer Brennweite, 12 die Eintrittsöffnung für die lange Brennweite, 13 eine zusätzlich in den Strahlengang schwenkbare Linsengruppe zur Brennweitenverläng rung (Korrekturglied), 14 ein fest eingebautes 90°-Prisma zur Ablenkung des Sucherstrahlengangs für die lange Brennweite (Sucherprisma), 15 ein ebensolches, mit dem Objektiv 9 verbundenes 90°-Prisma, 16 der Auslöser, 17 ein Elektronenblitz für Aufnahme mit kurzer Brennweite und zur indirekten Raumaufhellung bei Aufnahmen mit mittlerer und langer Brennweite sowie 18 ein direkt strahlender Blitz für letztgenannte Aufnahmen.

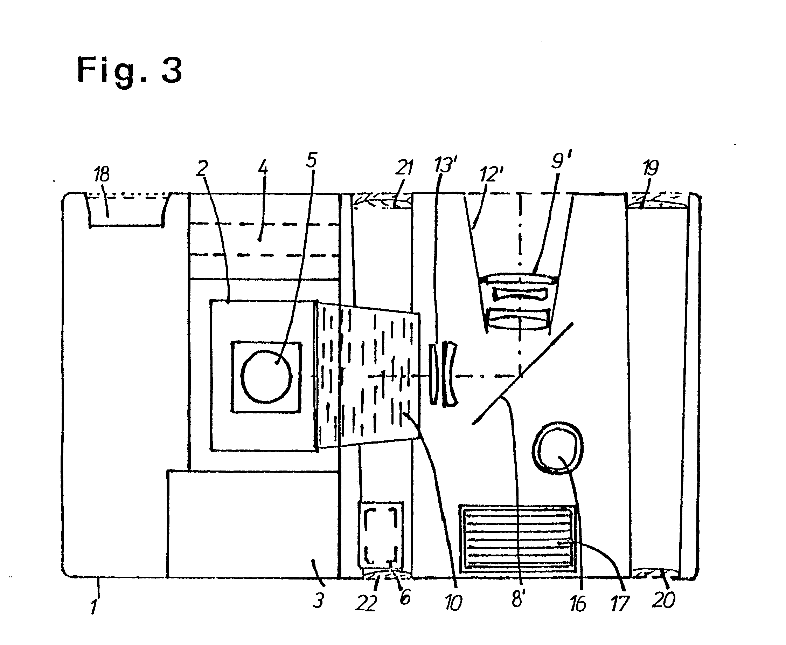

Bei der Ausführungsform gemäß Figur 3 befindet sich die erste Linsengruppe mittlerer Brennweite 9' vor und die zweite Linsengruppe zur Brennweitenverlängerung 13' nach dem ersten 90°-Spiegel oder -Prisma 8', während sich die Suchereintrittsöffnung 19 neben (oder unter) der hier einen Objektivöffnung 12' befindet. Eine weitere Eintrittsöffnung, etwa im Augenabstand, 21 ermöglicht die stereoskopische oder Mischbild-Entfernungsmessung. Die zu den Eintrittsöffnungen 19 und 21 gehörigen Suchereinblicksöffnungen sind mit 20 bzw. 22 bezeichnet. Die Bezugszahlen 1 bis 6, 10, 16, 17 and 18 kennzeichnen in Figur 3 gleiche Teile wie in den Figuren 1 und 2.

Bei beiden Ausführungsformen gemäß Fig. 1, 2 und 3 wird für Aufnahmen mit kurzer Brennweite, z.B. 28 mm, das Weitwinkelobjektiv 5 mittels Betätigung eines nicht eingezeichneten Schiebers an der Kameraunterseite durch den linken Daumen aus der geschützten Ruhestellung in Arbeitsposition über der Mitte des Bildfensters 2 gebracht, wobei gleichzeitig der Ablenkspiegel 10 aus dem Strahlengang entfernt wird. Die kleine Sucherparallaxe zwischen dem Weitwinkelobjektiv 5 und dem Sucher 6 ist bei der verwendeten sehr kurzen Brennweite völlig bedeutungslos, und eine genaue Fokussierung ist bei einer maximalen Öffnung von 1:4 ebenfalls nicht erforderlich.

Bei der Ausführungsform einer Kamera gemäß Figuren 1 und 2 sind Aufnahme-und Sucher-Strahlengang für mittlere und lange Brennweite völlig identisch. Unabhängig von der vollauf ausreichenden Objektivöffnung von maximal 1:4 bzw. 1:8 bei Brennweiten von 50 bis 70 mm bzw. 100 bis 135 mm ermöglicht der Albada-oder Meßsucher 6 dennoch ein helles parallaxfreies Sucherbild, das zudem außerhalb des Begrenzungsrahmens auch das Umfeld erkennen läßt.

Anstelle des Strahlenteilerprismas 8 mit etwa einer Blende Lichtverlust, der aber leicht durch einen höherempfindlichen Film wieder ausgeglichen werden kann, ist natürlich auch die Verwendung eines Schwingspiegels möglich.

Bei Aufnahmen mit der längsten Brennweite wird die Linsengruppe 9 durch einen im Bereich der Kameraunterseite angebrachten, nicht dargestellten Schiebehebel ebenfalls mittel Daumenbetätigung gemeinsam mit dem Halbspiegelprisma 8 und dem zweiten Sucherprisma 15 aus der Position gemäß Fig. 1 in die rechte Anschlagposition gemäß Fig. 2 gebracht. Diese Position korrespondiert mit der Lage der Eintrittsöffnung 12 und der Position des ersten Sucherprismas 14. Gleichzeitig wird bspw. durch Federkraft das speziell berechnete brennweitenverlängernde Korrekturglied 13 in den Strahlengang gebracht.

Natürlich kann anstelle der Linsengruppen 9 und 13 auch besonders vorteilhaft ein Zoomobjektiv geringen Durchmessers mit brennweiten-konstanter Baulänge oder auch nur eine längere Festbrennweite verwendet werden. Auch kann. das Weitwinkelobjektiv 5 ein Weitwinkelzoomobjektiv sein. Ebenfalls kann die okularseitige Umlenkung des Sucherstrahlenganges entfallen und durch eine zweite Sucheraustrittsöffnung ersetzt werden, oder es kann auch statt der zweiten Eintrittsöffnung 12 eine mit dem gesamten rechten Gehäuseteil bei Auszugsverlängerung mitbewegte Öffnung 7 vorgesehen sein. Neben dieser Öffnung, die auch in idealer Weise als Sonnenblende wirkt, ist außerdem noch genug Platz für eine ausschwenkbare, achromatische Vorsatzlupe für Nahaufnahmen vorhanden.

Grundsätzlich ohne Strahlenteilung, aber mit einem oder zwei getrennten Sucherstrahlengängen arbeitet die Ausführungsform gemäß Fig. 3, wobei auch hier die Parallaxe durch einen symmetrisch angeordneten Stereosucher in der Wirkung völlig aufgehoben werden kann. Hierdurch wird gleichzeitig die Fokussierung vereinfacht und beschleunigt. In diesem Falle kreuzt der Sucherstrahlengang in seinem Verlauf von der Öffnung 21 zu der Öffnung 22 den Aufnahmestrahlengang.

Für Aufnahmen mit längeren Brennweiten ist die Handhabung der erfindungsgemäßen Kompaktkamera genauso einfach und problemlos wie bei einer Pocketkamera. Ergänzt wird dies durch motorischen Filmaufzug, Autofocus und automatische Blitzsteuerung.

Der Wechsel vom Tele-zum Weitwinkelbereich erfolgt bei entspannter Handhaltung ebenso einfach und schnell durch die Brennweitenumschaltung mit dem linken Daumen und eine völlig organisch ablaufende Kippung der Kamera um die günstigste Raumachse.

Besonders vorteilhaft ist schließlich noch die Anordnung der eingebauten Blitzsysteme, wobei der größtmögliche Achsabstand zwischen Blitz und Objektiv bei der längsten Brennweite erreicht wird.

## Ansprüche

1. Kompaktkamera mit mehreren Brennweiten und abgelenktem Strahlengang, **dadurch gekennzeichnet,** daß bei Aufnahmen mit mittleren und längen Brennweiten der Hauptstrahl zweifach rechtwinklig abgelenkt ist, wobei der bildseitige zu dem objektseitigen Hauptstrahl wiederum im rechten Winkel steht, während bei Aufnahmen im Weitwinkelbereich der Hauptstrahl nicht abgelenkt ist.

2. Kompaktkamera nach Anspruch 1, dadurch gekennzeichnet, daß die Kamera für beide um eine Raumachse gedrehten Bedienungslagen jeweils mit einem eigenen Sucherund Blitzsystem (6, 11, 20, 22; 17, 18) ausgerüstet ist.

3. Kompaktkamera nach Anspruch 1 oder 2, dadurch gekennzeichnet, daß der Hauptstrahl vor dem Aufnahmeobjektiv (9) aufgespalten und um 90° zu diesem hin abgelenkt ist, während der Sucherstrahlengang nicht abgelenkt ist.

4. Kompaktkamera nach Anspruch 2 oder 3, dadurch gekennzeichnet, daß der Sucher (6) ein einfacher Albada-oder Meßsucher mit eingespiegelter Formatbegrenzung ist.

5. Kompaktkamera nach Anspruch 3 oder 4, dadurch gekennzeichnet, daß das Aufnahmeobjektiv (9) zusammen mit dem Strahlenteilerprisma (8) in Richtung der optischen Achse verschiebbar ist und daß in Telestellung ein dazu speziell berechnetes Korrekturglied (13) in den Strahlengang geschwenkt ist.

6. Kompaktkamera nach einem der Ansprüche 2 bis 5, dadurch gekennzeichnet, daß der Sucherstrahlengang durch zwei Hilfsprismen (14, 15) zur Sucheraustrittsöffnung (11) hin abgelenkt ist.

7. Kompaktkamera nach einem der Ansprüche 3, 4 oder 6, gekennzeichnet durch ein Zoomobjektiv geringen Durchmessers und dadurch, daß die Formatbegrenzung im Sucher variabel mit der Brennweitenverstellung gekuppelt ist.

8. Kompaktkamera nach einem der Ansprüche 1 bis 7, dadurch gekennzeichnet, daß ein Vorsatzachromat für Nahaufnahmen in den Strahlengang einschwenkbar eingebaut ist.

9. Kompaktkamera nach Anspruch 1 oder 2, dadurch gekennzeichnet, daß das Objektiv (9') oder dessen erste Linsengruppe in oder im Bereich der Objektivöffnung (12') vor dem ersten 90°-Vollspiegel oder -Prisma (8') und die Suchereintrittsöffnung (19) direkt neben oder unterhalb der Objektivöffnung (12') angeordnet ist.

10. Kompaktkamera nach Anspruch 9, dadurch gekennzeichnet, daß auf der anderen Seite neben der Objektivöffnung (12') eine zweite Eintrittsöffnung (21) für einen stereoskopischen Sucher oder Mischbildentfernungsmesser bzw. eine Autofocus-Einrichtung angeordnet ist.

11. Kompaktkamera nach einem der Ansprüche 1 bis 10, gekennzeichnet durch ein Zoomobjektiv als Weitwinkelobjektiv (5).

# Fig. 1

0 281 127

# Fig. 2

0 281 127

# Fig. 3

0 281 127